# EUROPÄISCHE PATENTSCHRIFT

(11) **EP 2 885 180 B1**
(45) Veröffentlichungstag und Bekanntmachung des Hinweises auf die Patenterteilung: **22.06.2016**
(21) Anmeldenummer: 13748294.9
(22) Anmeldetag: 12.08.2013
(51) Int. Cl.: B60T 8/18

(54) **LASTBREMSVENTIL FÜR SELBSTTÄTIGE DRUCKLUFTBREMSEN**
LOAD-CONTROLLED BRAKE VALVE FOR INDEPENDENT PNEUMATIC BRAKES
VALVE DE RELAIS DE CHARGE POUR FREINS À AIR COMPRIMÉ AUTOMATIQUES

(30) Priorität: 14.08.2012 DE 102012107452
(43) Veröffentlichungstag der Anmeldung: 24.06.2015
(73) Patentinhaber: KNORR-BREMSE Systeme für Schienenfahrzeuge GmbH, 80809 München (DE)
(72) Erfinder: COMERLATI, Robert, 85521 Ottobrunn (DE)
(86) Internationale Anmeldenummer: PCT/EP2013/066773
(87) Internationale Veröffentlichungsnummer: WO 2014/026936

(56) Entgegenhaltungen:
- EP-A1- 0 332 854
- EP-A1- 0 385 162
- WO-A2-2012/038286

## Beschreibung

### GEBIET DER ERFINDUNG

Die vorliegende Erfindung betrifft ein pneumatisches Lastbremsventil zum Betrieb mindestens einer selbsttätigen Druckluftbremse eines Schienenfahrzeuges nach Maßgabe eines Vorsteuerdruckes und eines aktuellen Beladungszustandes eines jeweiligen Wagens, umfassend einen von einem Bremszylinderdruck beaufschlagten ersten Kolben mit einer ersten Kolbenstange, einen von dem Vorsteuerdruck beaufschlagten zweiten Kolben mit einer zweiten Kolbenstange, wobei die beiden Kolbenstangen mit einem Waagebalken zur Betätigung eines Doppelsitzventils zum Be- und Entlüften eines Bremszylinders zusammenwirken, wobei der Waagebalken mit einem Verstellstein an einer Verstelleinrichtung zusammenwirkt, dessen Lage bezüglich des Waagebalkens durch einen an einem nach unten gerichteten distalen Ende eine Tasterspitze aufweisenden, axial bewegbaren Taster einer Tastereinrichtung zur Registrierung des Beladungszustandes des jeweiligen Wagens veränderbar ist, wobei die Tastereinrichtung einen in einem Gehäuse befindlichen mit einer Kolbenstange verbundenen Dämpferkolben umfasst, der innerhalb eines im Gehäuse ausgebildeten Zylinders axial bewegbar ist.

Das Einsatzgebiet der vorliegenden Erfindung ist der Schienenfahrzeugbau. Schienenfahrzeuge können mit einem Lastbremsventil ausgestattet sein, bei dem der durch das vorgeschaltete Steuerventil erzeugte Druck an den aktuellen Beladungszustand des Wagens angepasst und anschließend in den Bremszylinder eingespeist wird.

### HINTERGRUND DER ERFINDUNG

Aus der DE 10 2006 025 329 B3 geht ein Lastbremsventil zur Lastabbremsung eines Schienenfahrzeugs hervor. Das Lastbremsventil umfasst einen ersten Kolben mit einer ersten Kolbenstange, auf den ein Bremsdruck wirkt und einem oder mehreren zweiten Kolben mit einer zweiten Kolbenstange, auf die ein oder mehrere Vorsteuerdrücke wirken. Die Kolbenstangen wirken mit einem Wiegebalken zusammen, der ein Einlassventil und ein Auslassventil betätigt, wobei das Einlassventil einen Druckluftvorrat mit einem Bremszylinder verbindet oder diese Verbindung sperrt. Das Auslassventil verbindet den Bremszylinder mit der Atmosphäre oder sperrt diese Verbindung. Der Wiegebalken ist mit einer Abstützung in Kontakt bringbar, deren Lage in Bezug zum Wiegebalken durch einen dritten Kolben verlängerbar ist, wobei der dritte Kolben einerseits durch einen lastabhängigen Druck und andererseits durch die Federkraft einer Druckfeder belastet ist. Die Druckfeder weist eine progressive Federkennlinie auf, so dass die Feder mit zunehmendem Federweg härter wird. Die Druckfeder wirkt an einem die Abstützung des Wiegebalkens verschiebenden dritten Kolben gegen die Druckkraft, welche vom lastproportionalen Steuerdruck ausgeübt wird. Durch Anpassung der progressiven Federkennlinie an die jeweils vorliegenden Randbedingungen kann die Nichtlinearität des Lastbremsventils kompensiert werden. Das Ergebnis ist daher eine lineare Kennlinie des Lastbremsventils.

Die WO 2012/038286 A2 offenbart ein Steuerventil für selbsttätige Druckluftbremsen zur Bildung eines Bremszylinderdruckes in mindestens einem angeschlossenen Bremszylinder nach Maßgabe einer Druckdifferenz zwischen einem Druck in einer angeschlossenen Hauptluftleitung eines Zuges und einem gespeicherten Referenzdruck. Das Steuerventil besteht aus einem Hauptteil und einem Leitungsteil, wobei das Hauptteil einen Steuerkolben und einen Ausgleichskolben umfasst. Zur Umschaltung zwischen verschiedenen Bremsdruckkennlinien sind Druckfedern, die auf den Ausgleichskolben wirken, über mechanische Umstellmittel vorspannbar. Diese Umstellmittel umfassen insbesondere eine im Gehäuse des Hauptteils drehend gelagert untergebrachte Schaltwelle, die über mindestens einen Stellnocken die Vorspannung der Druckfeder ändert.

Aus dem Fachbuch Asadtschenko, V.R.: Avtomatitscheskije Tormosa podvishnogo Sostawa sheleznogo Transporta (russ.), Moskau 2002, Seite 87 ff geht das allgemeine Prinzip eines Lastbremsventils hervor. Das Lastbremsventil ist gewöhnlich an einem Ventilträger angebracht und die notwendigen Druckluftverbindungen werden mit den betreffenden Anschlüssen am Ventilträger hergestellt. Das Lastbremsventil besteht hier aus einem Ventilteil und einem Taster. Die Skalierung des Bremszylinderdruckes obliegt dem Ventilteil, während Taster die Last des Wagens erfasst.

Wesentliche Bestandteile des Ventilteils sind ein von einem Bremszylinderdruck beaufschlagten Kolben, eine auf diesen wirkende Druckfeder, ein Doppelsitzventil zum Be- oder Entlüften des angeschlossenen Bremszylinders, ein von einem Vorsteuerdruck beaufschlagten Kolben, eine auf diesen wirkende Druckfeder sowie ein Waagebalken und ein an einem Taster befestigter Verstellstein, welcher als Schnittstelle zwischen einer Tastereinrichtung und der Ventileinrichtung des Lastbremsventils fungiert. Zur Tastereinrichtung gehört der einfahrbare Taster, eine auf diesen wirkende Druckfeder, ein Dämpferkolben, eine auf diesen wirkende Druckfeder, sowie der bereits erwähnte Verstellstein.

Das Ziel des Lastbremsventils ist es, die Abbremsung eines Wagens immer in einem optimalen Bereich zu halten und menschliche Fehler durch eine Fehlbedienung von manuellen Umstellern zu verhindern. Dadurch wird eine Überbremsung vermieden was wiederum eine Verminderung der Flachstellen und Heißläufern durch feste Bremsen zur Folge hat. Ebenso kann eine Unterbremsung vermieden werden, welche eine zu geringe Bremskraft und somit zu lange Bremswege zur Folge haben kann.

Die beweglichen Teile des Lastbremsventils sind durch das Gehäuse geführt. Geringe Bauteiltoleranzen und geeignete Spielpassungen sind vorzusehen, um eine exakte Axialführung zu gewährleisten. Da das Gehäuse gewöhnlich aus einem Gussmaterial besteht, können im Laufe der Zeit und unter Einfluss hoher Temperaturdifferenzen während des Betriebs Verschleißerscheinungen auftreten.

### OFFENBARUNG DER ERFINDUNG

Es ist daher die Aufgabe der vorliegenden Erfindung ein pneumatisches Lastbremsventil der gattungsgemäßen Art dahingehend zu verbessern, dass neben einer Kraftentkopplungsfunktion, eine kompakte und gewichtseinsparende Bauweise realisiert wird, wobei gleichzeitig die Lebensdauer und Feinfühligkeit durch eine Verringerung des Verschleißes verbessert werden.

Die Aufgabe wird ausgehend von einem Lastbremsventil gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß sind zwischen dem axial bewegbaren Taster und der Kolbenstange eine mittelbar auf die Kolbenstange wirkende Entkopplungsfeder zur Kraftentkopplung und eine mittelbar auf den axial bewegbaren Taster wirkende Rückstellfeder angeordnet. Der axial bewegbare Taster wird von der Rückstellfeder auf die Endlage im Gehäuse bzw. auf eine Tasterplatte am Wagen gedrückt. Die auf den Dämpferkoben wirkende Kraft, wird von der Entkopplungsfeder begrenzt. Somit kann der Dämpferkolben deutlich kleiner und kompakter dimensioniert werden. Der Entkopplungsmechanismus sorgt dafür, dass die Kraft auf den Dämpferkoben beim Ein- und Ausfahren des axial bewegbaren Tasters symmetrisch ist. Die im axial bewegbaren Taster auftretenden Federkräfte können dadurch auf ein niedriges Niveau gehalten werden.

Vorzugsweise kommt die Rückstellfeder mit dem einen Ende an einer nach innen gerichteten Stirnfläche des axial bewegbaren Tasters zur Anlage, um den axial bewegbaren Taster bis zu einem radial ausgebildeten Anschlag aus dem Gehäuse heraus zu drücken, wobei die Rückstellfeder mit dem anderen Ende an einer im Gehäuse ausgebildeten Anlagefläche zur Anlage kommt. Diese Anordnung der Rückstellfeder im Gehäuse ist besonders vorteilhaft, um die zuvor genannte Aufgabenstellung zu erfüllen. Zudem ergeben sich weitere bauraumeinsparende Vorteile dadurch, dass die Entkopplungsfeder innerhalb der Rückstellfeder angeordnet ist.

Des Weiteren bevorzugt ist, dass die Entkopplungsfeder mit dem einen Ende an einem in einem Rohr befindlichen und an der Kolbenstange anliegenden oberen Federteller zur Anlage kommt und mit dem anderen Ende an einem in dem Rohr befindlichen unteren Federteller zur Anlage kommt. Ferner ist die Entkopplungsfeder vorgespannt und wirkt wie eine elastische Verbindung zwischen dem oberen und dem unteren Federteller. Die Entkopplungsfeder realisiert eine Kraftentkopplung des Dämpferkobens von der Tasterspitze. Darüber hinaus sind die Kolbenstange, der Zylinder und das Rohr fließgepresste Aluminiumteile aus einer Aluminium-Silizium-Legierung, vorzugsweise aus AlSilMgMn. Dadurch wird nicht nur Gewicht eingespart, sondern auch die Trägheit axial beweglicher Teile wie der Kolbenstange und des Rohrs herabgesetzt.

Die Erfindung schließt die technische Lehre ein, dass die Tasterspitze über den axial bewegbaren Taster und einer zwischen dem unteren Federteller und der Tasterspitze angeordneten Druckstange auf die Entkopplungsfeder einwirkt, wobei eine Zugstange innerhalb des Rohrs angeordnet ist und derart mit der Druckstange verbunden ist, dass eine axiale Bewegung der Druckstange nach unten die Zugstange ebenfalls nach unten bewegt. Bei Beladung des Wagens wird über die Tasterspitze der axial bewegbare Taster mit der Druckstange axial nach oben verschoben. Der obere Federteller ist mit der Zugstange verbunden. Über den unteren Federteller wird die vorgespannte Entkopplungsfeder gestaucht, wodurch über den oberen Federteller eine Druckkraft auf die Kolbenstange und den Dämpferkolben ausgeübt wird. Der Betrag dieser Kraft wird von der Vorspannung der Entkopplungsfeder bestimmt. Gemäß einer die Erfindung weiter verbessernden Maßnahme wird vorgeschlagen, dass eine Schutzhülse aus einem Polymer an einer Außenumfangsfläche und an einer Innenumfangsfläche des Rohrs angeordnet ist, um vor durch die Rückstellfeder und die Entkopplungsfeder verursachten Abrieb des Rohrs zu schützen. Vorteilhafterweise kommt die Schutzhülse an der Außenumfangsfläche des Rohrs an einer im Gehäuse ausgebildeten Anlagefläche zur Anlage und wird an dieser durch die Rückstellfeder fixiert. Die Schutzhülse an der Innenumfangsfläche des Rohrs erstreckt sich im Wesentlichen über die gesamte axiale Länge des Rohrs und wird somit durch das Rohr selbst fixiert. Das Polymer ist vorzugsweise ein Thermoplast, insbesondere Polyoxymethylen (POM). Ein Abrieb der Schutzhülse beeinträchtigt nicht die Funktion der Tastereinrichtung. Ferner ist ein einfacher Wechsel verschlissener Schutzhülsen im Rahmen einer Wartung möglich.

Es wird weiterhin vorgeschlagen, dass die axial bewegbaren Bauteile innerhalb der Tastereinrichtung in Gleitringen oder Gleitbändern zur Reduktion von Verschleiß geführt sind. Die Gleitringe bestehen im Wesentlichen aus einem Polymer, insbesondere aus Polytetrafluorethylen (PTFE), und sind faserverstärkt. Ferner sind die Gleitringe geschlitzt ausgeführt und auf dem axial bewegbaren Taster eingeschnappt. Demgegenüber bestehen die Gleitbänder ebenfalls aus einem Polymer, insbesondere aus PTFE, wobei der Kohlenstoffanteil im PTFE bei mindestens 25% liegt. Die Gleitbänder werden vorzugsweise um den Dämpferkolben bzw. an der Rohrführung in den Zylinder gelegt und sind im Betrieb axial in einer Nut fixiert. Durch Gleitringe und Gleitbänder wird eine langlebige, präzise, reibungs- und verschleißarme Lagerung der bewegbaren Bauteile realisiert.

Vorzugsweise weisen alle Lufteintritts- und Luftaustrittskanäle ein in einem Dichtungselement eingebettetes Feinsieb zur Vermeidung eines Ein- und Austritts von Schmutzpartikeln in das Lastbremsventil auf, wobei das Dichtungselement an den zur Anlage kommenden Dichtungsflächen mindestens einen radial zur Dichtungsfläche ausgebildeten Dichtungssteg aufweist. Die Einbettung des Feinsiebes in das vorzugsweise U-förmige Dichtungselement nimmt keinen zusätzlichen Bauraum in Anspruch. Ferner erzeugt der mindestens eine Dichtungssteg eine lokal erhöhte Dichtwirkung in diesem Bereich, wobei die Ausbildung von mehreren Dichtstegen entlang der Dichtungsfläche des Dichtungselements, die Sicherheit bezüglich der Dichtwirkung erhöht. Das Dichtungselement besteht vorzugsweise aus einem speziell für den Temperaturbereich zwischen -60°C bis +80°C entwickeltes Elastomer, insbesondere Nitrilkautschuk (NBR). Es ist jedoch auch denkbar das Dichtungselement aus einem Silikonwerkstoff herzustellen.

Des Weiteren bevorzugt ist, dass die Verstelleinrichtung von außerhalb des Lastbremsventils zugänglich ist, um eine Einstellung eines Leerdruckes vorzunehmen, wobei die Position des Verstellsteins über das Ein- und Ausschrauben einer Verstellschraube einstellbar ist. Die Verstellschraube wird vorzugsweise über eine frei von außen zugängliche Entlüftungsbohrung eingestellt.

Gemäß einer die Erfindung weiter verbessernden Maßnahme wird vorgeschlagen, dass an der Verstellschraube mindestens zwei vollmetallische, selbstsichernde Muttern angeordnet sind, wobei die eine vollmetallische, selbstsichernde Mutter eine Verdrehung der Verstellschraube relativ zum Verstellstein verhindert und die andere vollmetallische, selbstsichernde Mutter eine axiale Verschiebung der Verstellschraube relativ zur Verstelleinrichtung verhindert. Der Vorteil dieser Lösung ist, dass das Lastbremsventil nicht vom Prüfstand genommen und zerlegt werden muss, falls bei der Prüfung eine Abweichung des Leerdruckes festgestellt wird. Eine Abweichung des Leerdruckes kann durch Fertigungs- und Montagetoleranzen hervorgerufen werden. Ferner erfolgt die Einstellung des Leerdruckes iterativ und kann unter Umständen mehrere Durchläufe erfordern. Der Vorteil der vollmetallischen Ausführung der selbstsichernden Muttern besteht unter anderem darin, dass diese unempfindlich gegen Temperatureinflüsse sind.

Die Erfindung schließt die technische Lehre ein, dass der Waagebalken an seinen Auflagepunkten mit den Kolbenstangen drehbar gelagert zur Minimierung der Reibung und des Verschleißes sowie zur Erhöhung der Feinfühligkeit ist, wobei eine der auf den Waagebalken einwirkenden Kolbenstangen eine ballige Führung aufweist, um ein Querspiel der Kolbenstange zu ermöglichen. Der bei einer Bewegung des Waagebalkens entstehende Winkelversatz wird durch den drehbar gelagerten von dem Vorsteuerdruck beaufschlagten zweiten Kolben realisiert. Der von dem Bremszylinderdruck beaufschlagte erste Kolben bleibt axial eng geführt, um ein planes Aufliegen des Ventilsitzes sicherzustellen. Durch diese spezielle Lageranordnung kann die Reibung am Waagebalken minimiert und somit die Feinfühligkeit erhöht werden.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: ein vereinfachtes Blockdiagramm einer pneumatischen Bremsausrüstung für ein Schienenfahrzeug gemäß einer bevorzugten Ausführungsform, und
- Fig.2: eine schematische Längsschnittdarstellung durch das pneumatische Lastbremsventil aus Fig. 1.

### DETAILLIERTE BESCHREIBUNG EINER BEVORZUGTEN AUSFÜHRUNGSFORM

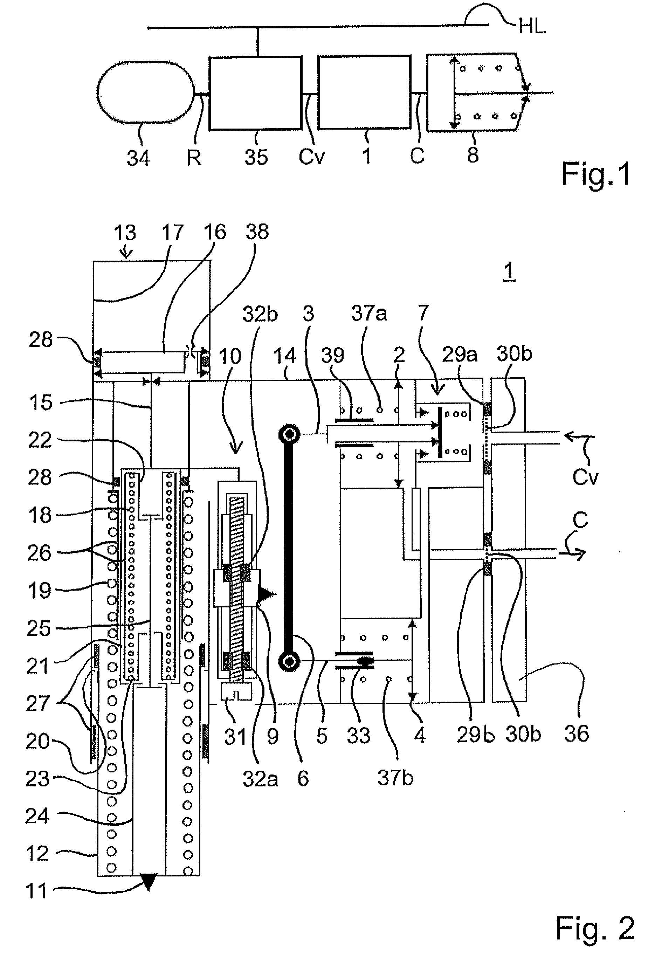

Figur 1 zeigt eine vereinfachte Darstellung einer pneumatischen Bremsausrüstung. An einer sich durch den gesamten Zug erstreckenden Hauptluftleitung HL ist ein Steuerventil 35 angeordnet. An dem Steuerventil 35 ist ein Vorratsluftbehälter 34 angeordnet, der einen in das Steuerventil 35 mündenden Speisedruck R generiert. Das Steuerventil 35 steuert die Füllung des Vorratsluftbehälters 34 und generiert einen Vorsteuerdruck Cv. Dazu weist das Steuerventil 35 eine eingangsseitig in ein Lastbremsventil 1 mündende, den Vorsteuerdruck Cv führende Leitung auf. Das Lastbremsventil 1 ist regelbar und wandelt den vom Steuerventil 35 erzeugten Vorsteuerdruck Cv in einen Bremszylinderdruck C um. Der Bremszylinderdruck C mündet in einen Bremszylinder 8, der den Druck in eine Kraft für eine - hier nicht dargestellte - Reibungsbremse umwandelt.

Figur 2 zeigt das erfindungsgemäße Lastbremsventil 1 mit der dazugehörigen integrierten Tastereinrichtung 13. Das Lastbremsventil 1 weist an einem Träger 36 einen Lufteinlass auf, durch den der vom Steuerventil 35 kommende Vorsteuerdruck Cv in das Lastbremsventil 1 einströmt. Zwischen dem Träger 36 und dem Lastbremsventil 1 ist ein Dichtungselement 29 in Form einer Flanschdichtung 29 angeordnet. Die Flanschdichtung 29 umfasst ein zwischen den Dichtungsschenkeln eines U-förmigen Dichtungsprofils angeordnetes Feinsieb 30 zum filtern von Partikeln. Ein Doppelsitzventil 7 ist zum Be- und Entlüften des angeschlossenen Bremszylinders stromabwärts der Flanschdichtung 29 angeordnet.

Auf einen von dem Bremszylinderdruck C beaufschlagten ersten Kolben 2, der mit einer ersten Kolbenstange 3 verbunden ist, wirkt eine Druckfeder 37a. Auf einen von dem Vorsteuerdruck Cv beaufschlagten zweiten Kolben 4, der mit einer zweiten Kolbenstange 5 verbunden ist, wirkt eine Druckfeder 37b. Die beiden Druckfeder 37a und 37b sorgen dafür, dass ein Waagebalken 6 im drucklosen Zustand des Lastbremsventils 1 und somit auch des Doppelsitzventils 7 einen an der Verstelleinrichtung 10 angeordneten Verstellstein 9 nicht berührt. Ferner sorgt die Druckfeder 37a am ersten Kolben 2 dafür, dass das Doppelsitzventil 7 im drucklosen Zustand geöffnet ist. Der Waagebalken 6 ist an seinen Auflagepunkten mit den Kolbenstangen 3 und 5 zur Minimierung der Reibung und des Verschleißes sowie zur Erhöhung der Feinfühligkeit drehbar gelagert. Die zweite auf den Waagebalken 6 wirkende Kolbenstange 5 weist eine ballige Führung 33 auf, um ein Querspiel der Kolbenstange 5 zu ermöglichen. Die erste Kolbenstange 3 weist demgegenüber eine spielarme, zylindrische Führung 39 auf.

Wenn vom Steuerventil 35 Druck aufgebaut wird, gelangt dieser sowohl auf den zweiten Kolben 4 als auch, über das noch durch die Druckfeder 37a geöffnete Doppelsitzventil 7, auf den ersten Kolben 2. Überschreitet die Druckkraft am zweiten Kolben 2 die Federkraft der Druckfeder 37a, wird das Doppelsitzventil 7 geschlossen. Die Bewegung der beiden Kolben 2 und 4 führt dazu, dass der Waagebalken 6 gegen den Verstellstein 9 gedrückt wird. Das sich nun einstellende Kräftegleichgewicht erzeugt einen bestimmten Bremszylinderdruck C in Abhängigkeit vom Vorsteuerdruck Cv und von der Position des Verstellsteins 9. Wenn der Vorsteuerdruck Cv geändert wird, verändert sich auch die auf den zweiten Kolben 4 wirkende Kraft, wobei die auf den ersten Kolben 2 wirkende Kraft vorerst konstant bleibt. Die auf den zweiten Kolben 4 wirkende Kraft wird über den Drehpunkt am Waagebalken 6 übersetzt und auf den ersten Kolben 2 übertragen. Dadurch ist das Kräftegleichgewicht am Waagebalken 6 gestört, wobei der Waagebalken 6 in Bewegung gerät. Je nach Änderung des Vorsteuerdruckes Cv wird das Doppelsitzventil 7 geöffnet und erst dann wieder geschlossen, wenn sich ein neues Gleichgewicht am Waagebalken 6 eingestellt hat.

Die Tastereinrichtung 13 nimmt auf die Verstelleinrichtung 10 Einfluss und verschiebt den Verstellstein 9 in Abhängigkeit eines aktuellen Beladungszustandes eines jeweiligen Wagens. Der erfindungsgemäße Aufbau der Tastereinrichtung 13 ermöglicht eine Kraftentkopplung zwischen dem axial bewegbarer Taster 12 und einem in einem Zylinder 17 axial bewegbaren Dämpferkolben 16, sowie zwischen dem axial bewegbarer Taster 12 und dem Verstellstein 9. Der axial bewegbare Taster 12 wird von einer Rückstellfeder 19 bis zu einem radial ausgebildeten Anschlag 20 aus dem Gehäuse 14 heraus gedrückt bzw. auf eine - hier nicht dargestellte - Tasterplatte am Wagen gedrückt. Die auf den Dämpferkolben 16 wirkende Kraft, wird von einer Entkopplungsfeder 18 begrenzt. Der Entkopplungsmechanismus sorgt dafür, dass die Kraft auf dem Dämpferkolben 16 beim ein- und ausfahren des axial bewegbaren Tasters 12 also symmetrisch ist. Die in der Tastereinrichtung 13 auftretenden Kräfte können somit auf einem niedrigen Niveau gehalten werden, wodurch die Dimensionen der Tastereinrichtung 13 verringert werden können.

Bei einer Beladung des Wagens wird über eine Tasterspitze 11 der axial bewegbare Taster 12 zusammen mit einer darin angeordneten Druckstange 24 nach oben gedrückt. Über einen unteren Federteller 23 wird die vorgespannte Entkopplungsfeder 18 gestaucht, wodurch über einen oberen Federteller 22 eine Druckkraft auf die Kolbenstange 15 und den Dämpferkolben 16 ausgeübt wird. Der Betrag dieser Kraft ist von dem Betrag der Vorspannkraft der Entkopplungsfeder 18 abhängig. Die axiale Bewegung des Dämpferkolbens 16 nach oben bewirkt einen Überdruck oberhalb und einen Unterdruck unterhalb des Dämpferkolbens 16. Die daraus resultierenden Kräfte wirken der Federkraft der Rückstellfeder 19 entgegen. Die Druckdifferenz am Dämpferkolben 16 wird langsam über eine im Dämpferkolben 16 angeordnete Düse 38 abgebaut, so dass sich der Dämpferkolben 16 samt Kolbenstange 15 und einem um die Entkopplungsfeder 18 angeordnetem Rohr 21 langsam axial nach oben bewegen, bis ein unterer Anschlag im Rohr 21 den unteren Federteller 23 erreicht und die Kraftwirkung auf die Kolbenstange 15 und den Dämpferkolben 16 beendet ist.

Sobald sich der axial bewegbare Taster 12 nach unten bewegt, wird über einen Anschlag an einer innerhalb des axial bewegbaren Tasters 12 angeordnete Druckstange 24, eine mit der Druckstage 24 verbundene Zugstange 25 sowie der obere Federteller 22 nach unten gezogen. Die Entkopplungsfeder 18 wird vom oberen Federteller 22 nach unten gedrückt und erzeugt über den unteren Federteller 23 und dem Anschlag im Rohr 21 eine axial nach unten gerichtete Zugkraft auf die Kolbenstange 15 und den Dämpferkolben 16. Nun bildet sich auf der Unterseite des Dämpferkolbens 16 ein Überdruck und auf der Oberseite des Dämpferkolbens 16 ein Unterdruck. Die daraus entstehenden Kräfte am Dämpferkolben 16 wirken der Federkraft der Rückstellfeder 19 entgegen. Diese Druckdifferenz am Dämpferkolben 16 wird langsam über die Düse 38 im Dämpferkolben 16 abgebaut, wodurch sich der Dämpferkolben 16 samt Kolbenstange 15 und Rohr 21 langsam axial nach unten bewegt, bis der obere Federteller 22 den oberen Anschlag im Rohr 21 erreicht und die Kraftwirkung auf die Kolbenstange 15 und den Dämpferkolben 16 beendet ist.

An einer Außenumfangsfläche des Dämpferkolbens 16 und an einer Außenumfangsfläche des Rohrs 21 ist jeweils ein Gleitband 28a und 28b zur Reduktion von Verschleiß angeordnet. Ferner sind zwischen dem axial bewegbaren Taster 12 und dem Gehäuse 14 zwei Gleitringe 27a und 27b angeordnet. Dadurch wird nicht nur der Verschleiß gesenkt sondern darüber hinaus auch die Feinfühligkeit des axial bewegbaren Tasters 12 erhöht. Jeweils eine aus einem Polymer gefertigte Schutzhülse 26 ist an einer Außenumfangsfläche und an einer Innenumfangsfläche des Rohrs 21 angeordnet, um vor durch die Rückstellfeder 19 und die Entkopplungsfeder 18 verursachten Abrieb des Rohrs 21 zu schützen.

Die Verstelleinrichtung 10 ist von außerhalb des Lastbremsventils 1 zugänglich, um eine Einstellung eines Leerdruckes vorzunehmen, wobei die Position des Verstellsteins 9 über das Ein- und Ausschrauben einer Verstellschraube 31 einstellbar ist. An der Verstellschraube 31 sind zwei vollmetallische, selbstsichernde Muttern 32a und 32b angeordnet. Die obere vollmetallische, selbstsichernde Mutter 32b verhindert eine Verdrehung der Verstellschraube 31 relativ zum Verstellstein 9 und die untere vollmetallische, selbstsichernde Mutter 32a verhindert eine axiale Verschiebung der Verstellschraube 9 relativ zur Verstelleinrichtung 10.

### Bezugszeichenliste

- 1: Lastbremsventil
- 2: erster Kolben
- 3: erste Kolbenstange
- 4: zweiter Kolben
- 5: zweite Kolbenstange
- 6: Waagebalken
- 7: Doppelsitzventil
- 8: Bremszylinder
- 9: Verstellstein
- 10: Verstelleinrichtung
- 11: Tasterspitze
- 12: axial bewegbarer Taster
- 13: Tastereinrichtung
- 14: Gehäuse
- 15: Kolbenstange
- 16: Dämpferkolben
- 17: Zylinders
- 18: Entkopplungsfeder
- 19: Rückstellfeder
- 20: Anschlag
- 21: Rohr
- 22: oberen Federteller
- 23: unteren Federteller
- 24: Druckstange
- 25: Zugstange
- 26: Schutzhülse
- 27: Gleitringen
- 28: Gleitbändern
- 29: Dichtungselement
- 30: Feinsieb
- 31: Verstellschraube
- 32a, 32b: vollmetallische, selbstsichernde Mutter
- 33: ballige Führung
- 34: Vorratsluftbehälter
- 35: Steuerventil
- 36: Träger
- 37a, 37b: Druckfeder
- 38: Düse
- 39: zylindrische Führung
- C: Bremszylinderdruck
- Cv: Vorsteuerdruck
- HL: Hauptluftleitung
- R: Speisedruck

## Patentansprüche

1. Pneumatisches Lastbremsventil (1) zum Betrieb mindestens einer selbsttätigen Druckluftbremse eines Schienenfahrzeuges nach Maßgabe eines Vorsteuerdruckes (Cv) und eines aktuellen Beladungszustandes eines jeweiligen Wagens, umfassend einen von einem Bremszylinderdruck (C) beaufschlagten ersten Kolben (2) mit einer ersten Kolbenstange (3), einen von dem Vorsteuerdruck (Cv) beaufschlagten zweiten Kolben (4) mit einer zweiten Kolbenstange (5), wobei die beiden Kolbenstangen (3, 5) mit einem Waagebalken (6) zur Betätigung eines Doppelsitzventils (7) zum Be- und Entlüften eines Bremszylinders (8) zusammenwirken, wobei der Waagebalken (6) mit einem Verstellstein (9) an einer Verstelleinrichtung (10) zusammenwirkt, dessen Lage bezüglich des Waagebalkens (6) durch einen an einem nach unten gerichteten distalen Ende eine Tasterspitze (11) aufweisenden, axial bewegbaren Taster (12) einer Tastereinrichtung (13) zur Registrierung des Beladungszustandes des jeweiligen Wagens veränderbar ist, wobei die Tastereinrichtung (13) einen in einem Gehäuse (14) befindlichen mit einer Kolbenstange (15) verbundenen Dämpferkolben (16) umfasst, der innerhalb eines im Gehäuse (14) ausgebildeten Zylinders (17) axial bewegbar ist,
**dadurch gekennzeichnet, dass** zwischen dem axial bewegbaren Taster (12) und der Kolbenstange (15) eine mittelbar auf die Kolbenstange (15) wirkende Entkopplungsfeder (18) zur Kraftentkopplung und eine mittelbar auf den axial bewegbaren Taster (12) wirkende Rückstellfeder (19) angeordnet sind.

2. Lastbremsventil (1) nach Anspruch 1,
**dadurch gekennzeichnet, dass** die Rückstellfeder (19) mit dem einen Ende an einer nach innen gerichteten Stirnfläche des axial bewegbaren Tasters (12) zur Anlage kommt, um den axial bewegbaren Taster (12) bis zu einem radial ausgebildeten Anschlag (20) aus dem Gehäuse (14) heraus zu drücken, wobei die Rückstellfeder (19) mit dem anderen Ende an einer im Gehäuse (14) ausgebildeten Anlagefläche zur Anlage kommt.

3. Lastbremsventil (1) nach Anspruch 1,
**dadurch gekennzeichnet, dass** die Entkopplungsfeder (18) mit dem einen Ende an einem in einem Rohr (21) befindlichen und an der Kolbenstange (15) anliegenden oberen Federteller (22) zur Anlage kommt und mit dem anderen Ende an einem in dem Rohr (21) befindlichen unteren Federteller (23) zur Anlage kommt.

4. Lastbremsventil (1) nach Anspruch 1,
**dadurch gekennzeichnet, dass** die Tasterspitze (11) über den axial bewegbaren Taster (12) und einer zwischen dem unteren Federteller (23) und der Tasterspitze (11) angeordneten Druckstange (24) auf die Entkopplungsfeder (18) einwirkt, wobei eine Zugstange (25) innerhalb des Rohrs (21) angeordnet ist und derart mit der Druckstange (24) verbunden ist, dass eine axiale Bewegung der Druckstange (24) in Richtung des Wagens die Zugstange (25) ebenfalls in Richtung des Wagens bewegt.

5. Lastbremsventil (1) nach Anspruch 3,
**dadurch gekennzeichnet, dass** eine Schutzhülse (26) aus einem Polymer an einer Außenumfangsfläche und an einer Innenumfangsfläche des Rohrs (21) angeordnet ist, um vor durch die Rückstellfeder (19) und die Entkopplungsfeder (18) verursachten Abrieb des Rohrs (21) zu schützen.

6. Lastbremsventil (1) nach einem der vorhergehenden Ansprüche,
**dadurch gekennzeichnet, dass** die axial bewegbaren Bauteile innerhalb der Tastereinrichtung (13) in Gleitringen (27) oder Gleitbändern (28) zur Reduktion von Verschleiß geführt sind.

7. Lastbremsventil (1) nach Anspruch 1,
**dadurch gekennzeichnet, dass** alle Lufteintritts- und Luftaustrittskanäle ein in einem Dichtungselement (29) eingebettetes Feinsieb (30) zur Vermeidung eines Ein- und Austritts von Schmutzpartikeln in das Lastbremsventil (1) aufweisen, wobei das Dichtungselement (29) an den zur Anlage kommenden Dichtungsflächen mindestens einen radial zur Dichtungsfläche ausgebildeten Dichtungssteg aufweist.

8. Lastbremsventil (1) nach Anspruch 1,
**dadurch gekennzeichnet, dass** die Verstelleinrichtung (10) von außerhalb des Lastbremsventils (1) zugänglich ist, um eine Einstellung eines Leerdruckes vorzunehmen, wobei die Position des Verstellsteins (9) über das Ein- und Ausschrauben einer Verstellschraube (31) einstellbar ist.

9. Lastbremsventil (1) nach Anspruch 8,
**dadurch gekennzeichnet, dass** an der Verstellschraube (31) mindestens zwei vollmetallische, selbstsichernde Muttern (32a, 32b) angeordnet sind, wobei die eine Sicherungsmutter (32b) eine Verdrehung der Verstellschraube (31) relativ zum Verstellstein (9) verhindert und die andere Sicherungsmutter (32a) eine axiale Verschiebung der Verstellschraube (9) relativ zur Verstelleinrichtung (10) verhindert.

10. Lastbremsventil (1) nach Anspruch 1,
**dadurch gekennzeichnet, dass** der Waagebalken (6) an seinen Auflagepunkten mit den Kolbenstangen (3, 5) drehbar gelagert zur Minimierung der Reibung und des Verschleißes sowie zur Erhöhung der Feinfühligkeit ist, wobei einer der auf den Waagebalken (6) einwirkenden Kolbenstangen (3, 5) eine ballige Führung (33) aufweist, um ein Querspiel der Kolbenstange (5) zu ermöglichen.

## Claims

1. Load-controlled pneumatic brake valve (1) for operation of at least one independent pneumatic brake of a rail vehicle as a function of a pilot pressure (Cv) and a current load condition of a respective railway carriage, comprising a first piston (2) onto which acts a brake cylinder pressure (C) and which includes a first piston rod (3), a second piston (4) onto which acts said pilot pressure and which includes a second piston rod (5), wherein said two piston rods (3, 5) interact with a weighing beam (6) for operation of a double-seat valve (7) for aeration and venting of a brake cylinder (8), with said weighing beam (6) interacting with an adjusting piece (9) on an adjusting means (10) whose position, relative to said weighing beam (6), is variable by means of an axially movable sensing means (12) of a sensing device (13), which includes a sensing tip (11) on a downwardly oriented distal end, for recording the load condition of the respective railway carriage, with said sensing device (13) including a damping piston (16) located in a housing (14) and connected to a piston rod (15), which damping piston is axially mobile inside a cylinder (17) formed in said housing (14),
**characterised in that** a decoupling spring (18) for force decoupling is arranged between said axially mobile sensing means (12) and said piston rod (15) and acts indirectly upon said piston rod (15), and that a restoring spring (19) is disposed there, which acts indirectly upon said axially mobile sensing means (12).

2. Load-controlled brake valve (1) according to Claim 1,
**characterised in that** said restoring spring (19) bears by its first end against an inwardly oriented face of said axially mobile sensing means (12) for pushing said axially mobile sensing means (12) out of said housing (14) up to a radially formed stop (20), with said restoring spring (19) bearing by its other end against a contact surface formed in said housing (14).

3. Load-controlled brake valve (1) according to Claim 1,
**characterised in that** said decoupling spring bears by its first end against an upper spring plate (22) located in a tube (21) and bearing against said piston rod (15) and bears by its other end against a lower spring plate (23) located in said tube (21).

4. Load-controlled brake valve (1) according to Claim 1,
**characterised in that** said sensing tip (11) acts via said axially mobile sensing means (12) and a push rod (24) disposed between said lower spring plate (23) and said sensing tip (11) upon said decoupling spring (18), with a tie rod (25) being disposed inside said tube (21) and being connected to said push rod (24) in such a way that an axial movement of said push rod (24) in the direction of the railway carriage equally moves said tie rod (25) in the direction of the railway carriage.

5. Load-controlled brake valve (1) according to Claim 3,
**characterised in that** a protective sleeve (26) made of a polymer is arranged on an external peripheral surface and on an internal peripheral surface of said tube (21) for protection of said tube (21) from wear caused by said restoring spring (19) and said decoupling spring (18).

6. Load-controlled brake valve (1) according to any of the preceding Claims,
**characterised in that** the axially movable components inside of said sensing device (13) are guided in sliding rings (27) or sliding tapes (28) for wear reduction.

7. Load-controlled brake valve (1) according to Claim 1,
**characterised in that** all air entry and air discharge passages are provided with a fine screen (30) embedded in a sealing element (29) for avoiding the entry and exit of pollutant particles into and out of the load-controlled brake valve (1), with said sealing element including at least one sealing web formed radially relative to said sealing surface on the sealing surfaces coming into bearing contact.

8. Load-controlled brake valve (1) according to Claim 1,
**characterised in that** said adjusting means (10) is accessible from the outside of the load-controlled brake valve (1) for adjustment of an idling pressure, with the position of said adjusting piece (9) being adjustable by screwing an adjusting screw (31) in and out.

9. Load-controlled brake valve (1) according to Claim 8,
**characterised in that** at least two fully metallic self-locking nuts (32a, 32b) are disposed on said adjusting screw (31), with a first self-locking nut (32b) preventing said adjusting screw (31) from turning relative to said adjusting piece (9) and with the other self-locking nut (32a) preventing said adjusting screw (9) from axial displacement relative to said adjusting means (10).

10. Load-controlled brake valve (1) according to Claim 1,
**characterised in that** said weighing beam (6) is supported for rotation with said piston rods (3, 5) on its supporting points for minimising friction and wear as well as for increase of the sensitivity, with one of said piston rods (3, 5) acting upon said weighing beam (6) presenting a spherical guide (33) for permitting a transverse play of said piston rod (5).

## Revendications

1. Soupape de frein pneumatique sensible à la charge (1) pour la commande d'au moins un frein pneumatique indépendant d'un véhicule ferroviaire en fonction d'une pression pilote (Cv) et d'un état de chargement actuel d'un wagon de chemins de fer respectif, comprenant un premier piston (2), sur lequel agit une pression de cylindre de frein (C) et qui est pourvue d'une première tige de piston (3), un deuxième piston (4), sur lequel agit ladite pression pilote et qui st pourvue d'une deuxième tige de piston (5), dans lequel lesdites deux tiges de piston (3, 5) interagissent avec un fléau de bascule (6) pour la commande d'une soupape à double siège (7) pour la ventilation et l'aération d'un cylindre de frein (8), audit fléau de bascule (6) interagissant avec une pièce de réglage (9) à un moyen de réglage (10), dont la position, par rapport audit fléau de bascule (6), est variable moyennant un moyen de palpage mobile en sens axial (12) d'un dispositif palpeur (13), qui contient une pointe de palpage (11) à une extrémité distale orientée en bas, pour l'enregistrement de l'état de chargement du wagon de chemins de fer respectif, audit dispositif palpeur (13) renfermant un piston amortisseur (16) disposé dans un carter (14) et relié à une tige de piston (15), ce piston amortisseur étant mobile en sens axial à l'intérieur d'un cylindre (17) formé dans ledit carter (14),
**caractérisé en ce qu'**un ressort de découplage (18) pour le découplage d'une force est disposé entre ledit moyen de palpage mobile en sens axial (12) et ladite tige de piston (15) et agit indirectement sur ladite tige de piston (15), et **en ce qu'**un ressort de rappel (19) est disposé là, qui agit indirectement sur ledit moyen de palpage mobile en sens axial (12).

2. Soupape de frein sensible à la charge (1) selon la revendication 1,
**caractérisé en ce que** ledit ressort de rappel (19) porte par sa première extrémité contre une face orientée vers l'intérieur dudit moyen de palpage mobile en sens axial (12) afin de pousser ledit moyen de palpage mobile en sens axial (12) en dehors dudit carter (14) jusqu'à un arrêt formé radialement (20), audit ressort de rappel (19) portant par son autre extrémité contre une surface de contact formée dans ledit carter (14).

3. Soupape de frein sensible à la charge (1) selon la revendication 1,
**caractérisé en ce que** ledit ressort de découplage porte par sa première extrémité contre une coupelle supérieure (22) disposée dans un tube (21) et portant contre ladite tige de piston (15), et porte par son autre extrémité contra une coupelle inférieure (23) disposée dans ledit tube (21).

4. Soupape de frein sensible à la charge (1) selon la revendication 1,
**caractérisé en ce que** ladite pointe de palpage (11) agit via ledit moyen de palpage mobile en sens axial (12) et une barre de pression (24) disposée entre ladite coupelle inférieure (23) et ladite pointe de palpage (11) sur ledit ressort de découplage (18), à une barre de traction (25) étant disposée à l'intérieur dudit tube (21) en étant reliée à ladite barre de pression (24) d'une telle façon, qu'un mouvement axial de ladite barre de pression (24) selon la direction du wagon de chemins de fer déplace également ladite barre de traction (25) selon la direction du wagon de chemins de fer.

5. Soupape de frein sensible à la charge (1) selon la revendication 3,
**caractérisé en ce qu'**une douille protective (26) faite en un polymère est disposée à une surface périphérique extérieure et une surface périphérique intérieure dudit tube (21) pour la protection dudit tube (21) contre l'usure due audit ressort de rappel (19) et audit ressort de découplage (18).

6. Soupape de frein sensible à la charge (1) selon une quelconque des revendications précédentes,
**caractérisé en ce que** les composants mobile en sens axial à l'intérieur dudit dispositif palpeur (13) sont guidés dans des anneaux de glissement (27) ou des bandes de glissement (28) pour une réduction de l'usure.

7. Soupape de frein sensible à la charge (1) selon la revendication 1, **caractérisé en ce que** tous les passages d'entrée et de sortie pourvu d'un tamis fin (30) encastré dans un élément d'étanchéité (29) afin d'éviter l'entrée et la sortie des particules contaminants dans ou en dehors du soupape de frein sensible à la charge (1), audit élément d'étanchéité renfermant au moins une entretoise d'étanchéité formée radialement, par rapport à ladite surface d'étanchéité sur les surfaces d'étanchéité, qui viennent en contact portant.

8. Soupape de frein sensible à la charge (1) selon la revendication 1,
**caractérisé en ce que** ledit moyen de réglage (10) est accessible de l'extérieur de la soupape de frein sensible à la charge (1) pour le réglage d'une pression au ralenti, à la position de ladite pièce de réglage (9) étant réglable en vissant un vis de réglage (31) à l'intérieur ou en dévissant le vis de réglage (31).

9. Soupape de frein sensible à la charge (1) selon la revendication 8,
**caractérisé en ce qu'**au moins deux écrous autobloquants entièrement en métal (32a, 32b) sont disposés sur ledit vis de réglage (31), à un premier écrou autobloquant (32b) empêchant une rotation dudit vis de réglage (31) par rapport à ladite pièce de réglage (9) et à l'autre écrou autobloquant empêchant un déplacement axial dudit vis de réglage (9) par rapport audit moyen de réglage (10).

10. Soupape de frein sensible à la charge (1) selon la revendication 1,
**caractérisé en ce que** ledit fléau de bascule (6) s'appuie pour une rotation avec lesdites tiges de piston (3, 5) sur ses points d'appui afin de minimiser la friction et l'usure, ainsi que pour l'augmentation de la sensibilité, à une desdites tiges de piston (3, 5) agissant sur ledit fléau de bascule (6) pourvue d'un guide sphérique (33) afin de permettre un jeu transversal de ladite tige de piston (5).
